# EUROPÄISCHE PATENTSCHRIFT

(11) **EP 1 361 490 B1**
(45) Veröffentlichungstag und Bekanntmachung des Hinweises auf die Patenterteilung: **14.01.2009**
(21) Anmeldenummer: 03006521.3
(22) Anmeldetag: 22.03.2003
(51) Int. Cl.: G05D 7/01

(54) **Durchflussmengenregler**
Flow controller
Régulateur de débit

(30) Priorität: 07.05.2002 DE 10220287
(43) Veröffentlichungstag der Anmeldung: 12.11.2003
(73) Patentinhaber: Neoperl GmbH, 79379 Müllheim (DE)
(72) Erfinder: Söchtig, Michael, 79395 Neuenburg (DE)
(74) Vertreter: Maucher, Wolfgang

(56) Entgegenhaltungen:
- DE-A- 1 473 130
- DE-A- 2 060 751
- DE-A- 2 131 117

## Beschreibung

Die Erfindung betrifft einen Durchflussmengenregler mit einem Reglergehäuse, in dem in einem Durchtrittskanal ein ringförmiger Drosselkörper aus elastischem Material vorgesehen ist, der auf einen Fixierturm aufgeschoben ist und diesen umgreift, welcher Fixierturm zumindest zwei entgegen der Schieberichtung orientierte Fixierstege hat, die mit ihrem freien Stegende den Drosselkörper sichernd hintergreifen, wobei der Drosselkörper zwischen sich und zumindest einem gehäusefesten Teil einen Steuerspalt begrenzt, dessen Durchtrittsquerschnitt durch den sich unter der beim Durchströmen bildenden Druckdifferenz verformenden Drosselkörper veränderbar ist.

Es ist bereits ein Durchflussmengenregler der eingangs erwähnten Art bekannt, bei dem der ringförmige Drosselkörper einen zentralen Fixierturm umgreift, über dessen freies Turmende vier Fixierstege vorstehen. Nach Aufschieben des Drosselkörpers auf den Fixierturm werden die Fixierstege des vorbekannten Durchflussmengenreglers durch Kaltverformung des Kunststoffmaterials derart nach außen umgebogen und aufgespreizt, dass sie den ringförmigen Drosselkörper gegen einen Verlust sichern. Das verwendete Herstellungsverfahren hat jedoch den Nachteil, dass wegen der plastischen Deformation des ursprünglich hülsenförmigen Fixierturmes und wegen des Aufspreizens der Fixierstege ein zusätzlicher, den Fertigungsprozeß verlangsamender Montageschritt erforderlich ist, der verformte Zustand nur schwer exakt reproduzierbar ist, sich Risse im Material bilden können und sich häufig ein scheinbar "unsauberes" Erscheinungsbild des Mengenreglers ergibt, das von den Käufern dieses Mengenreglers anschließend beanstandet wird. Zudem kann es bei einem rissbedingten Verlust eines Fixiersteges und einem Gegendruck zu einem Herausfallen des ringförmigen Drosselkörpers und zu entsprechenden Funktionsstörungen kommen.

Um ein derartiges Kaltverformen von Fixierstegen zu vermeiden, kennt man auch bereits einen Mengenregler, der einen massiv ausgestalteten Fixierturm hat. An diesem massiven Fixierturm sind auf gegenüberliegenden Seiten radial nach außen vorstehende Sicherungsvorsprünge vorgesehen. Zur Herstellung dieses vorbekannten Mengenreglers ist jedoch ein Spritzgusswerkzeug erforderlich, das als Backenwerkzeug ausgestaltet ist oder im Bereich des massiven Fixierturmes sogenannte Tauchkerne hat, um beim Herausnehmen des Spritzgussteiles aus dem Spritzgusswerkzeug nicht die an den Fixierstegen vorgesehenen Sicherungsvorsprünge abzuscheren. Die Tauchkerne werden während des Spritzgießens von unten in die Kavität eingeformt. Solche Tauchkerne sind jedoch empfindliche Werkzeugbestandteile, die am stärksten von Verschleiß betroffen sind. Außerdem können Tauchkerne nur in begrenzter Anzahl verwendet werden, weil ansonsten die Unterseite des Gehäuses strukturell zu stark geschwächt wird.

Man hat daher auch einen Mengenregler geschaffen, dessen zentraler Regelkern als separater Kreuzpin ausgestaltet ist. Dieser Kreuzpin kann durch die Ringöffnung des elastischen Drosselkörpers hindurchgeführt und im Reglergehäuse anschließend unverlierbar fixiert werde. Nachteilig ist jedoch, dass dieser vorbekannte Mengenregler aus mehreren Teilen besteht und dass auch bei der Herstellung des Reglergehäuses mehrere Schritte erforderlich sind.

Aus der DE 14 73 130 A kennt man bereits einen Durchflussmengenregler mit einem ringförmigen Drosselkörper aus elastischem Material, der auf einen zentralen Fixierturm aufgeschoben ist und diesen umgreift. Der zentrale Fixierturm ist konisch ausgebildet und weist an seinem zuströmseitigen verjüngten Endbereich einen scheibenförmigen Flansch auf, der den ringförmigen Drosselkörper auf dem Fixierturm sichert. Bei der Montage muss der ringförmige Drosselkörper über den scheibenförmigen Flansch hinweg auf den Fixierturm gestülpt werden, was mit einem nicht unerheblichen Aufwand verbunden sein kann.

Es besteht daher insbesondere die Aufgabe, einen funktionssicheren Mengenregler der eingangs erwähnten Art zu schaffen, der mit geringem Aufwand kostengünstig herstellbar ist.

Die erfindungsgemäße Lösung dieser Aufgabe besteht bei dem Durchflussmengenregler der eingangs erwähnten Art insbesondere darin, dass die Fixierstege als biegeelastisch einlenkbare Federstege ausgestaltet sind.

Der erfindungsgemäße Mengenregler weist einen Fixierturm auf, bei dem die den Drosselkörper sichernd hintergreifenden Fixierstege als biegeelastisch einlenkbare Federstege ausgestaltet sind. Durch biegeelastisches Einlenken der Federstege kann der Außenabstand ihrer Stegenden vorübergehend so weit reduziert werden, dass sich der elastische Drosselkörper ohne weiteres auf den Fixierturm aufschieben lässt. Nach dem anschließenden Ausfedern der Fixierstege ist der Drosselkörper praktisch unverlierbar auf dem Fixierturm gehalten, so dass ein Verlust des Drosselkörpers beispielsweise beim Transport des Durchflussmengenreglers verhindert und Funktionsstörungen vermieden werden. Da die Fixierstege auslenkbar sind, lässt sich auch ein als Kunststoffspritzgussteil ausgestalteter Mengenregler leicht aus einem einfachen Spritzgusswerkzeug entformen, ohne dass aufwendige Backenwerkzeuge oder teuere und störanfällige Spritzgusswerkzeuge mit Tauchkernen erforderlich wären.

Besonders vorteilhaft ist es, wenn die Fixierstege den Drosselkörper jeweils mit einem am freien Stegende angeordneten Haltenocken oder dergleichen, den Stegquerschnitt erweiternder Ausformung hintergreifen. Diese den Stegquerschnitt in radialer Richtung nach außen erweiternde Ausformung bildet einen Hinterschnitt, die den Drosselkörper sicher auf dem Fixierturm hält.

Um eine einfache Montage des Drosselkörpers auf dem Fixiersteg zu erleichtern und um dort dessen sicheren Halt zu begünstigen, ist es zweckmäßig, wenn der Fixierturm zwei bis acht, vorzugsweise vier kreuzweise angeordnete Fixierstege trägt.

Dabei wird eine Ausführungsform bevorzugt, bei der die Fixierstege in gleichmäßigen Abständen über den Turmumfang verteilt sind.

Die Fixierstege sind besonders stabil am Fixierturm angeformt, wenn die Fixierstege durch Längsschlitze in der Fixierturm-Wandung voneinander getrennt sind.

Beim Überziehen des ringförmigen Drosselkörpers werden die biegeelastischen Fixierstege praktisch von selbst eingelenkt, wenn die an den Fixierstegen vorgesehenen Ausformungen eine sich in Schieberichtung radial nach außen erweiternde Auflaufschräge bilden. Diese Montage- oder Auflaufschrägen an den Stegenden der Fixierstege gewährleisten, dass bei der Montage der ringförmige Drosselkörper rasch zugeführt werden kann und dass Drosselkörper und Fixierturm sich gut finden.

Um ein unerwünschtes Verdrehen oder Verdrillen des Drosselkörpers beim Aufschieben auf den Fixierturm zu vermeiden, ist es zweckmäßig, wenn die Auflaufschrägen gegenüber der Steg-Längsachse - je nach verwendetem Kunststoffmaterial - einen Winkel von 20° bis 30° einschließen.

Besonders vorteilhaft ist es, wenn die Ausformungen im Längsschnitt etwa keilförmig ausgestaltet sind.

Eine bevorzugte Ausführungsform gemäß der Erfindung sieht vor, dass die Gehäuse-Umfangswandung mit dem Fixierturm über radiale Verbindungsstege verbunden ist und dass die Verbindungsstege zwischen sich den Steuerspalt begrenzen.

Weitere Merkmale der Erfindung ergeben sich aus der folgenden Beschreibung eines erfindungsgemäßen Ausführungsbeispieles in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: einen perspektivisch dargestellten Durchflussmengenregler, der einen zentralen Fixierturm zum Aufschieben eines ringförmigen Drosselkörpers aus elastischem Material hat, und
- Fig. 2: einen mit Figur 1 vergleichbaren Durchflussmengenregler in einem Längsschnitt, dessen Fixierturm von einem ringförmigen Drosselkörper aus elastischem Material umgriffen ist.

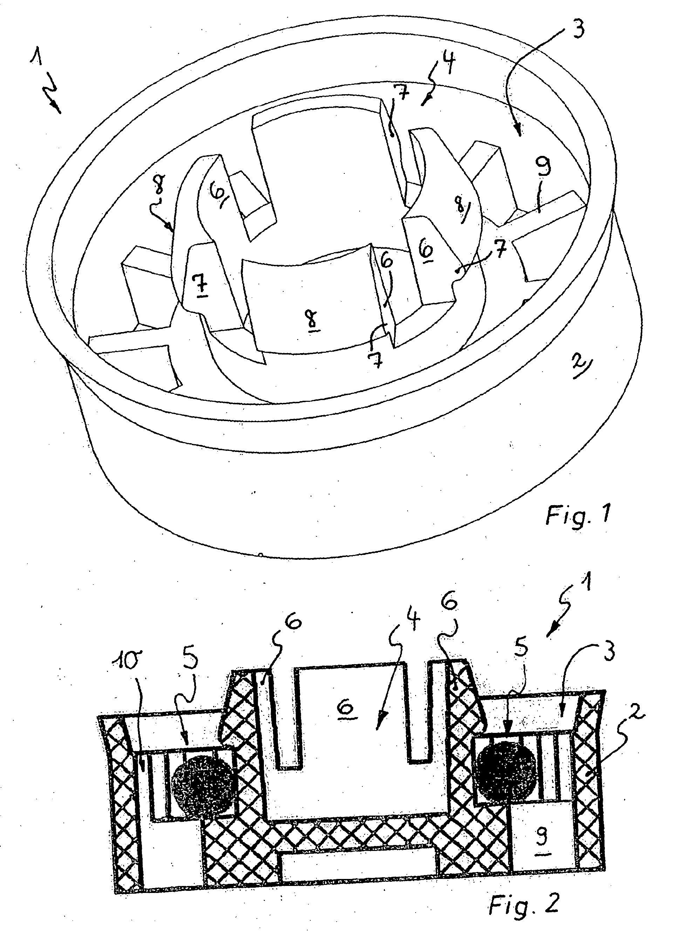

In Figur 1 ist ein Durchflussmengenregler 1 dargestellt, der zum Einbau in eine sanitäre Wasserleitung bestimmt ist. Der Durchflussmengenregler 1 dient zum Einregeln der durch die Wasserleitung strömenden Wassermenge auf einen definierten Maximalwert. Der Durchflussmengenregler 1 hat ein Reglergehäuse 2, in dem ein Durchtrittskanal 3 für das durchströmende Wasser vorgesehen ist. Im Reglergehäuse 2 ist ein zentraler Fixierturm 4 vorgesehen.'

Wie aus einem Vergleich der Figuren 1 und 2 deutlich wird, kann auf den Fixierturm 4 ein ringförmiger Drosselkörper 5 aufgeschoben werden, der zwischen sich und einem gehäusefesten Teil einen Steuerspalt begrenzt, dessen Durchtrittsquerschnitt durch den sich unter der beim Durchströmen bildenden Druckdifferenz verformenden Drosselkörper 5 veränderbar ist.

An dem entgegen der Durchströmrichtung vorstehenden Fixierturm 4 sind vier Fixier- oder Haltestege 6 einstückig angeformt, die ebenfalls entgegen der Schieberichtung orientiert sind. Die Fixierstege 6 weisen an ihrem zuströmseitigen freien Stegende jeweils eine, den Stegquerschnitt in radialer Richtung erweiternde Ausformung 7 auf. Die an den Fixierstegen 6 vorgesehenen Ausformungen 7 sind im Längsschnitt keilförmig ausgebildet und weisen eine sich in Schieberichtung radial nach außen erweiternde Auflaufschräge 8 auf, auf die der elastische Drosselkörper 5 aufgeschoben werden kann.

Die Fixierstege 6 sind als biegeelastisch einlenkbare Federstege ausgestaltet. Beim Aufschieben des Drosselkörpers 5 auf die Fixierstege 6 werden die biegeelastischen Fixierstege 6 derart nach innen eingelenkt, dass der Drosselkörper 5 rasch und bequem auf den Fixierturm 4 aufgeschoben werden kann.

In Figur 2 ist ersichtlich, dass die Montage- oder Auflaufschrägen 8 gegenüber der Steg-Längsachse einen Winkel von 20° bis 30° einschließen, so dass ein unerwünschtes Verdrehen oder Verdrillen des Drosselkörpers 5 während des Aufschiebens auf den Fixierturm 4 weitestgehend vermieden wird. Die keilförmigen Ausformungen 7 bilden einen Hinterschnitt, der den Drosselkörper 5 auch während eines Transports praktisch unverlierbar auf dem Fixierturm 4 hält.

Die vier, vom Fixierturm 4 getragenen Fixierstege 6 sind in gleichmäßigen Abständen über den Turmumfang verteilt und durch Längsschlitze in der Fixierturm-Wandung voneinander getrennt. Beim Aufschieben des ringförmigen Drosselkörpers 5 auf die Auflaufschrägen 8 der biegeelastischen Fixierstege 6 werden die Fixierstege 6 nach innen eingelenkt, bis der Drosselkörper 5 über den durch die Fixierstege 6 gebildeten Hinterschnitt geschoben ist. Durch die biegeelastische Ausgestaltung der Fixierstege 6 läßt sich auch ein als Kunststoffspritzgußteil ausgestaltetes Reglergehäuse 2 trotz des vorgesehenen Hinterschnitts leicht aus einem einfachen Spritzgusswerkzeug entformen, ohne dass ein aufwendiges Backenwerkzeug oder ein Spritzgusswerkzeug mit Tauchkernen erforderlich wäre.

Der im Reglergehäuse 2 zentral angeordnete Fixierturm 4 ist geschlitzt, wobei die Längsschlitze den Fixierturm 4 im Bereich der Fixierstege 6 biegeelastisch machen. Durch diese biegeelastische Ausgestaltung des Fixierturmes 4 ist eine einfache Entformung aus dem Spritzgusswerkzeug möglich. Auch ein als Kunststoffspritzgussteil ausgestaltetes Reglergehäuse kann somit aus dem Spritzgusswerkzeug zwangsentformt werden. Der Aufbau des erforderlichen Spritzgusswerkzeuges ist vergleichsweise einfach. Die vier, zwischen den Fixierstegen 6 vorgesehenen Längsschlitze des Fixierturms 4 formen vier Fixierpunkte für den elastischen Drosselkörper 5. Je nach den an die Qualität der Fixierung des Drosselkörpers 5 gestellten Anforderungen kann der Fixierturm 4 beispielsweise auch durch sechs oder acht Längsschlitze in eine entsprechende Anzahl von Fixierstegen unterteilt werden.

Während der Montage des ringförmigen Drosselkörpers 5 treten nur vergleichsweise geringe Montagekräfte am Fixierturm 4 auf, weil dieser Fixierturm beim Überziehen des Drosselkörpers 5 sich etwas zusammenziehen und "atmen" kann. Die Montage- oder Auflaufschrägen 8 an den Fixierstegen 6 gewährleisten, dass der ringförmige Drosselkörper von oben schnell zugeführt werden kann und sich Drosselkörper 5 und Reglergehäuse 2 dabei gut finden. Die Reduzierung des Kraftaufwands wird durch die Kombination von Elastizität des Fixierturms 4 und geeignetem Winkel an den Montage- oder Auflaufschrägen 8 erreicht. Ein nachträgliches Umbiegen oder Verformen am Reglergehäuse 2 zur Fixierung des Drosselkörpers 5 ist nicht erforderlich. Sobald der ringförmige Drosselkörper seine definierte Position erreicht hat, wird er durch die Hinterschneidung an den Fixierstegen 6 des Fixierturms 4 gehalten und transportgesichert.

Aus den Figuren 1 und 2 wird deutlich, dass die Gehäuse-Umfangswand mit dem Fixierturm 4 über radiale Verbindungsstege 9 verbunden ist und dass die Verbindungsstege 9 zwischen sich den Steuerspalt begrenzen. In Figur 2 ist erkennbar, dass an der Gehäuseumfangswand innenseitig in Umfangsrichtung voneinander beabstandete und in Durchflussrichtung orientierte Profilnocken 10 vorgesehen sind, die zwischen sich Regulierausnehmungen bilden.

Zusätzlich oder statt dessen können solche Profilnocken 10 und Regulierausnehmungen auch an der Außenseite des Fixierturmes vorzugsweise in dem unterhalb der Fixierstege 6 vorgesehenen ungeschlitzten Teilbereich angeordnet sein.

## Patentansprüche

1. Durchflussmengenregler (1) mit einem Reglergehäuse (2), in dem in einem Durchtrittskanal ein ringförmiger Drosselkörper (5) aus elastischem Material vorgesehen ist, der auf einen Fixierturm (4) aufgeschoben ist und diesen umgreift, welcher Fixierturm (4) zumindest zwei entgegen der Schieberichtung orientierte Fixierstege (6) hat, die mit ihrem freien Stegende den Drosselkörper (5) sichernd hintergreifen, wobei der Drosselkörper (5) zwischen sich und zumindest einem gehäusefesten Teil einen Steuerspalt begrenzt, dessen Durchtrittsquerschnitt durch den sich unter der beim Durchströmen bildenden Druckdifferenz verformenden Drosselkörper (5) veränderbar ist, **dadurch gekennzeichnet, dass** die Fixierstege (6) als biegeelastisch einlenkbare Federstege ausgestaltet sind.

2. Durchflussmengenregler nach Anspruch 1, **dadurch gekennzeichnet, dass** die Fixierstege (6) den Drosselkörper (5) jeweils mit einem am freien Stegende angeordneten Haltenocken oder dergleichen, den Stegquerschnitt erweiternder Ausformung (7) hintergreifen.

3. Durchflussmengenregler nach Anspruch 1 oder 2, **dadurch gekennzeichnet, dass** der Fixierturm (4) zwei bis acht, vorzugsweise vier kreuzweise angeordnete Fixierstege (6) trägt.

4. Durchflussmengenregler nach einem der Ansprüche 1 bis 3, **dadurch gekennzeichnet, dass** die Fixierstege (6) in gleichmäßigen Abständen über den Turmumfang verteilt sind.

5. Durchflussmengenregler nach einem der Ansprüche 1 bis 4, **dadurch gekennzeichnet, dass** die Fixierstege (6) durch Längsschlitze in der Fixierturm-Wandung voneinander getrennt sind.

6. Durchflussmengenregler nach einem der Ansprüche 1 bis 5, **dadurch gekennzeichnet, dass** die an den Fixierstegen (6) vorgesehenen Ausformungen (7) eine sich in Schieberichtung radial nach außen erweiternde Auflaufschräge (8) bilden.

7. Durchflussmengenregler nach einem der Ansprüche 1 bis 6, **dadurch gekennzeichnet, dass** die Auflaufschrägen (8) gegenüber der Steg-Längsachse einen Winkel von 20° bis 30° einschließen.

8. Durchflussmengenregler nach einem der Ansprüche 1 bis 7, **dadurch gekennzeichnet, dass** die Ausformungen (7) im Längsschnitt etwa keilförmig ausgestaltet sind.

9. Durchflussmengenregler nach einem der Ansprüche 1 bis 8, **dadurch gekennzeichnet, dass** die Gehäuse-Umfangswandung mit dem Fixierturm (4) über radiale Verbindungsstege (9) verbunden ist und dass die Verbindungsstege (9) zwischen sich den Steuerspalt begrenzen.

## Claims

1. Flow regulator (1) having a regulator housing (2) in which is provided, in a throughflow channel, an annular throttle member (5) made of resilient material which is pushed onto a fixing tower (4) and surrounds the latter, the fixing tower (4) having at least two fixing crosspieces (6) which are oriented counter to the direction of pushing and which engage behind the throttle member (5) with their free ends so as to secure it, the throttle member (5) defining, between itself and at least one part that is attached to the housing, a control slot, the cross-section of which can be changed by the throttle member (5) deforming under the pressure difference that is formed during flow, **characterised in that** the fixing crosspieces (6) are constructed as bendable spring members that can be deflected inwards.

2. Flow regulator according to claim 1, **characterised in that** the fixing crosspieces (6) each engage behind the throttle member (5) with a retaining cam or similar moulding (7) provided at the free end of the crosspiece, that enlarges the cross-section of the crosspiece.

3. Flow regulator according to claim 1 or 2, **characterised in that** the fixing tower (4) has two to eight, preferably four fixing crosspieces (6) arranged crosswise.

4. Flow regulator according to one of claims 1 to 3, **characterised in that** the fixing crosspieces (6) are distributed at regular intervals around the circumference of the tower.

5. Flow regulator according to one of claims 1 to 4, **characterised in that** the fixing crosspieces (6) are separated from one another by longitudinal slits in the wall of the fixing tower.

6. Flow regulator according to one of claims 1 to 5, **characterised in that** the mouldings (7) provided on the fixing crosspieces (6) form an approach gradient (8) that widens radially outwards in the direction of pushing.

7. Flow regulator according to one of claims 1 to 6, **characterised in that** the approach gradients (8) enclose an angle of 20° to 30° relative to the longitudinal axis of the crosspieces.

8. Flow regulator according to one of claims 1 to 7, **characterised in that** the mouldings (7) are substantially wedge-shaped in longitudinal section.

9. Flow regulator according to one of claims 1 to 8, **characterised in that** the circumferential wall of the housing is attached to the fixing tower (4) via radial connecting crosspieces (9) and **in that** the connecting crosspieces (9) define the control slot between them.

## Revendications

1. Régulateur de débit (1), avec un boîtier de régulateur (2) dans lequel est prévu, dans un canal de passage, un corps d'étranglement annulaire (5) en matériau élastique qui est enfilé sur une tour de fixation (4) et s'engage autour de celle-ci, la tour de fixation (4) possédant au moins deux nervures de fixation (6) orientées à l'encontre de la direction d'enfilage qui, par leur extrémité libre, s'engagent derrière le corps d'étranglement (5) en le bloquant, sachant que le corps d'étranglement (5) délimite entre lui-même et au moins une partie solidaire du boîtier une fente de commande dont la section de passage peut être modifiée par le corps d'étranglement (5) qui se déforme sous l'effet de la différence de pression qui s'établit lors de l'écoulement, **caractérisé en ce que** les nervures de fixation (6) sont réalisées sous la forme de nervures élastiques qui peuvent être déviées vers l'intérieur par élasticité en flexion.

2. Régulateur de débit selon la revendication 1, **caractérisé en ce que** les nervures de fixation (6) s'engagent respectivement derrière le corps d'étranglement (5) par un ergot de retenue ou une formation en relief analogue (7), disposé(e) à l'extrémité libre de la nervure et élargissant la section de la nervure.

3. Régulateur de débit selon la revendication 1 ou 2, **caractérisé en ce que** la tour de fixation (4) porte deux à huit nervures de fixation (6), de préférence quatre nervures de fixation (6) disposées en croix.

4. Régulateur de débit selon l'une des revendications 1 à 3, **caractérisé en ce que** les nervures de fixation (6) sont réparties de manière équidistante sur la périphérie de la tour.

5. Régulateur de débit selon l'une des revendications 1 à 4, **caractérisé en ce que** les nervures de fixation (6) sont séparées les unes des autres par des fentes longitudinales dans la paroi de la tour de fixation.

6. Régulateur de débit selon l'une des revendications 1 à 5, **caractérisé en ce que** les formations en relief (7) prévues sur les nervures de fixation (6) forment un biais d'attaque (8) s'élargissant radialement vers l'extérieur dans la direction d'enfilage.

7. Régulateur de débit selon l'une des revendications 1 à 6, **caractérisé en ce que** les biais d'attaque (8) forment un angle de 20° à 30° par rapport à l'axe longitudinal de la nervure.

8. Régulateur de débit selon l'une des revendications 1 à 7, **caractérisé en ce que** les formations en relief (7) sont réalisées approximativement cunéiformes en coupe longitudinale.

9. Régulateur de débit selon l'une des revendications 1 à 8, **caractérisé en ce que** la paroi périphérique du boîtier est reliée à la tour de fixation (4) par l'intermédiaire de nervures de liaison radiales (9), et **en ce que** les nervures de liaison (9) délimitent entre elles la fente de commande.
